# EUROPEAN PATENT SPECIFICATION

(11) **EP 2 777 389 B1**
(45) Date of publication and mention of the grant of the patent: **05.10.2016**
(21) Application number: 12847456.6
(22) Date of filing: 01.11.2012
(51) Int. Cl.: A01J 11/06

(54) **METHOD FOR PRODUCING AND DEVICE FOR PRODUCING CHEESE STARTING MATERIAL MILK**
VERFAHREN ZUR HERSTELLUNG UND VORRICHTUNG ZUR HERSTELLUNG VON MILCH ALS KÄSEAUSGANGSMATERIAL
DISPOSITIF ET PROCÉDÉ DE FABRICATION DE LAIT EN TANT QU'INGRÉDIENT DE FROMAGE

(30) Priority: 07.11.2011 JP 2011243065
(43) Date of publication of application: 17.09.2014
(73) Proprietor: Tetra Laval Holdings & Finance S.A., 1009 Pully (CH)
(72) Inventor: ADACHI, Yoshio, Tokyo 102-8544 (JP)
(74) Representative: Tetra Pak - Patent Attorneys SE
(86) International application number: PCT/JP2012/078400
(87) International publication number: WO 2013/069546

(56) References cited:
- EP-A1- 0 697 816
- WO-A1-2005/086994
- WO-A1-2011/032957
- WO-A2-2010/085957
- DE-C1- 10 036 085
- DE-C1- 10 036 085
- JP-A- H01 215 238
- JP-A- H02 224 624
- JP-A- H11 505 121
- JP-A- S62 500 141
- JP-A- 2002 503 111
- JP-A- 2005 229 825
- JP-A- 2005 517 418

## Description

### Technical Field

The present invention relates to a method for producing and a device for producing a cheese starting material milk from milk by means of centrifugal separation and treatment with a microfilter membrane.

### Prior Art

The elimination of bacteria from milk by treating the milk in a centrifugal separator or with a microfilter membrane is known from the prior art. (See patent documents 1 to 3)

A method for centrifugally disinfecting bacteria-containing milk involves sterilizing a liquid, in which the quantity of bacteria has been concentrated, by heating, and then re-blending this liquid with milk which has been subjected to centrifugal separation. Approximately 90% of bacteria are eliminated by carrying out this treatment.

When carrying out treatment with a microfilter membrane, which separates milk into two fractions by microfiltration by causing milk to flow along the surface of a filter (a disinfecting filter), a permeate that passes through fine pores (0.1 to 10 µm) in the filter is skim milk and a retentate that does not pass through the filter is cream. Due to the fact that fat globules and bacteria present in the milk are approximately the same size, the obtained skim milk contains substantially no bacteria.

A microfilter for microfiltration has a structure in which a porous membrane (hereinafter referred to as a "membrane") is formed on a support body. Cross flow type microfiltration involves causing a liquid supplied to a filter to flow along a membrane, which separates the liquid into a permeate that passes through the membrane and a concentrated retentate that does not pass through the membrane.

Cheese is obtained by solidifying milk by means of lactic acid bacteria or an enzyme known as rennet, thereby obtaining a yogurt-like material, removing the aqueous component (the whey) so as to obtain a white solid, and then compressing this white solid to obtain a cheese starting material.

In order to produce cheese, it is important for the content of bacteria in a cheese starting material milk to be reduced to approximately 1/100th of the initial content. When producing cheese, it is particularly important to be able to start with milk having a low bacteria content.

This is because the obtained cheese must be discarded if bacteria are inadvertently cultured. Thoroughly heat treating milk is not suitable for carrying out such sterilization. This is because heat treatment reduces the quantity of cheese produced and also has an effect on the coagulation time.

Conventionally, cheese starting material milk production devices were provided with a heat exchanger for heating milk to a temperature sufficient for separation, a centrifugal separator for centrifugally separating milk into a cream fraction and a skim milk fraction, a microfilter, which subjected the skim milk fraction to treatment with a microfilter membrane and had an outlet for a permeate having a reduced bacteria content and an outlet for a retentate containing the residual bacteria that did not pass through the filter membrane, and a high temperature sterilization unit for sterilizing a mixed liquid containing the retentate and the cream fraction, and the sterilized mixed liquid containing the retentate and the cream fraction was combined with the permeate to obtain a cheese starting material milk.

In addition, other conventional cheese starting material milk production devices were provided with a heat exchanger for heating milk to a temperature sufficient for separation, a centrifugal separator for centrifugally separating milk into a cream fraction and a skim milk fraction, a microfilter, which subjected the skim milk fraction to treatment with a microfilter membrane and had an outlet for a permeate having a reduced bacteria content and an outlet for a retentate containing the residual bacteria that did not pass through the filter membrane, a pipe for returning the retentate from the retentate outlet to the milk supply port of the centrifugal separator, and a high temperature sterilization unit for sterilizing the cream fraction, and the sterilized cream fraction was combined with the permeate to obtain a cheese starting material milk.

### Prior Art Documents

### Patent Documents

Patent Document 1: Japanese Patent No. 2879153
Patent Document 2: Japanese Examined Patent Application Publication No. H04-12933
Patent Document 3: Japanese Examined Patent Application Publication No. H06-97945
Patent Document 3: EP 0 697 816 A1 disclosing a milk strained according to the preamble fo claim 1.

### Summary of the Invention

### Problems to be Solved by the Invention

In the former conventional production device, highly concentrated proteins present in the retentate were treated by high temperature sterilization, which led to concerns regarding denaturing of the milk and effects on the flavor of the cheese ultimately obtained. In addition, high temperature sterilization treatment consumes large quantities of energy.

In addition, in the latter conventional production devices, the retentate, which did not pass through the filter membrane and which contained high concentrations of residual bacteria, was mixed with the starting material milk and returned to the centrifugal separator, which led to concerns regarding bacteria remaining inside the separator and contaminating both the cream fraction and the skim milk fraction. In addition, because high concentrations of bacteria were returned to the centrifugal separator, the bacteria removal rate in the centrifugal separator was reduced. Furthermore, because the retentate was returned to the centrifugal separator, a higher capacity centrifugal separator was required.

An objective of the present invention is to provide a method for producing and a device for producing a cheese starting material milk which do not require high temperature sterilization treatment, do not cause denaturing, have no risk of affecting the flavor of the cheese, have low energy consumption, have no risk of contaminating a cream fraction or a skim milk fraction due to bacteria remaining in a centrifugal separator, increase the bacteria removal rate in the centrifugal separator, and do not require a large capacity centrifugal separator.

### Means for Solving the Problems

The device for producing a cheese starting material milk of the present invention comprises a starting material supply means that supplies a starting material milk; a first centrifugal separator, which has a supply port for the starting material milk, centrifugally separates the starting material milk into a cream fraction and a skim milk fraction, and has an outlet for the cream fraction, an outlet for the skim milk fraction and a sludge discharge port; a microfilter, which has a supply port for the skim milk fraction, subjects the skim milk fraction to treatment with a cross flow type microfilter membrane, and has an outlet for a permeate having a reduced bacteria content and an outlet for a retentate containing the residual bacteria that do not pass through the microfilter membrane; it is characterized by a second centrifugal separator, which has a supply port for the retentate, centrifugally separates the retentate into a clean fraction having a low bacteria content and a high bacteria content fraction, and has an outlet for the clean fraction and a discharge port for the high bacteria content fraction; a means for returning the clean fraction from the clean fraction outlet to the skim milk fraction supply port in the microfilter and/or the starting material milk supply port in the first centrifugal separator; and a high temperature sterilization unit that sterilizes the cream fraction; and the sterilized cream fraction and the permeate are combined to form a cheese starting material milk.

The method for producing a cheese starting material milk of the present invention is characterized in that a starting material milk is supplied from a starting material supply means, said starting material milk is supplied to a supply port in a first centrifugal separator, said starting material milk is centrifugally separated into a cream fraction and a skim milk fraction, said cream fraction is discharged from a cream fraction outlet, said skim milk fraction from a skim milk fraction outlet and a sludge from a sludge discharge port, said skim milk fraction is supplied to a supply port in a microfilter, said skim milk fraction is subjected to treatment with a cross flow type microfilter membrane so as to separate said skim milk fraction into a permeate having a reduced bacteria content and a retentate containing the residual bacteria that do not pass through the microfilter membrane, said permeate and said retentate are discharged, said retentate is supplied to a supply port in a second centrifugal separator, said retentate is centrifugally separated into a clean fraction having a low bacteria content and a high bacteria content fraction, the high bacteria content fraction is discharged, said clean fraction is returned to said skim milk fraction supply port in said microfilter and/or said starting material milk supply port in said first centrifugal separator, said clean fraction is sterilized in a high temperature sterilization unit, and said sterilized cream fraction and said permeate are combined to form a cheese starting material milk.

### Effect of the Invention

An explanation will now be given of the operation/execution and effect of the cheese starting material milk production of the present invention.

In the cheese starting material milk production of the present invention, a starting material milk is supplied from a starting material supply means. In the present specification, the starting material milk is milked from a cow, goat, sheep, and so on.

Next, the starting material milk is supplied to a supply port in a first centrifugal separator, the starting material milk is centrifugally separated into a cream fraction and a skim milk fraction, and the cream fraction, the skim milk fraction and a sludge are discharged from a cream fraction outlet, a skim milk fraction outlet and a sludge discharge port respectively.

Before being supplied to the first centrifugal separator, the starting material milk may be subjected to temperature adjustment using a heat exchanger or the like, pressure adjustment using a pump or the like, or flow rate adjustment using a valve or the like.

The skim milk fraction from the first centrifugal separator is supplied to a supply port in a microfilter, treated with a cross flow type microfilter membrane, and separated into a permeate having a reduced bacteria content and a retentate containing the residual bacteria that do not pass through the microfilter membrane, and the permeate and retentate are then discharged.

The microfilter has a supply port for the skim milk fraction, subjects the skim milk fraction to treatment with a cross flow type microfilter membrane, and has an outlet for a permeate having a reduced bacteria content and an outlet for a retentate containing the residual bacteria that do not pass through the microfilter membrane.

The skim milk from the centrifugal separator is used to produce powdered skim milk or is combined with cream to produce cheese. However, the skim milk contains bacteria. In addition, these bacteria include heat-resistant spore-forming bacteria. Spore-forming bacteria cannot be eliminated by conventional high-temperature short time sterilization (HTST methods in which sterilization is carried out for 15 seconds at a temperature of 72 to 78°C) carried out downstream of a centrifugal separation system. In cases where bacteria remain alive in the final product, these bacteria emerge from spores and start to become active during storage or treatment at temperatures and humidities suitable for propagation. Bacteria have an effect on the texture of cheese products and on the storage stability of dairy products that contain skim milk powder.

A first characteristic of the cheese starting material milk production of the present invention is the provision of a second centrifugal separator. The retentate is supplied to a supply port in the second centrifugal separator and is centrifugally separated into a clean fraction having a low bacteria content and a high bacteria content fraction.

The second centrifugal separator has a supply port for the retentate, centrifugally separates the retentate into a clean fraction having a low bacteria content and a high bacteria content fraction, and has an outlet for the clean fraction and a discharge port for the high bacteria content fraction. The first centrifugal separator is mainly used in order to separate into skim milk and cream, whereas the second centrifugal separator is used to remove bacteria.

For example, the second centrifugal separator, which is used to remove bacteria, eliminates 60 to 99% of spore-containing bacteria by means of gravity difference within the same temperature range as the microfilter without needing to carry out heat treatment.

A second characteristic of the cheese starting material milk production of the present invention is discharging the high bacteria content fraction and returning the clean fraction to the skim milk fraction supply port in the microfilter and/or the starting material milk supply port in the first centrifugal separator.

This return means returns the clean fraction from the clean fraction outlet to the skim milk fraction supply port in the microfilter and/or the starting material milk supply port in the first centrifugal separator.

As the clean fraction contains the skim milk fraction which has an extremely low bacteria content, it is possible to dilute the treatment liquid and reduce the load on the centrifugal separator and it is also possible to carry out the separation by the first centrifugal separator and/or the filtering by the microfilter membrane more efficiently.

In the cheese starting material milk production of the present invention, the cream fraction, which is essential for returning the milk fat component of the cheese, is sterilized in the high temperature sterilization unit.

For example, high temperature heat treatment is carried out at 121°C, but because the quantity of thermally degradable components in the cream component is low, damage caused by high temperature heat treatment can be kept to a minimum.

In the cheese starting material milk production of the present invention, the sterilized cream fraction, which contains the milk fat components of the cheese, is combined with the permeate to form the cheese starting material milk.

Cheese is obtained by solidifying the cheese starting material milk by means of lactic acid bacteria or an enzyme known as rennet, for example, thereby obtaining a yogurt-like material, converting this yogurt-like material into a white solid, and then compressing this white solid to obtain a cheese starting material.

By carrying out the cheese starting material milk production of the present invention as described above, it is possible to produce a cheese starting material milk which does not require high temperature sterilization treatment of the skim milk fraction, and accordingly, does not cause denaturing to proteins or flavor components, has no risk of affecting the flavor of the cheese product, has low energy consumption due to the skim milk fraction not being heated to a high temperature, has no risk of contaminating the cream fraction or the skim milk fraction due to bacteria remaining in the first centrifugal separator, increases the bacteria removal rate in the first centrifugal separator, and does not require a large capacity first centrifugal separator.

### Brief Description of the Drawings

Fig. 1 is a schematic flow diagram showing one example of a cheese starting material milk production device according to the present invention.
Fig. 2 is a schematic flow diagram showing an example of a conventional cheese starting material milk production device.
Fig. 3 is a schematic flow diagram showing another example of a conventional cheese starting material milk production device.

### Mode for Implementing the Invention

A detailed explanation will now be given of a mode for implementing the present invention with reference to the drawings.

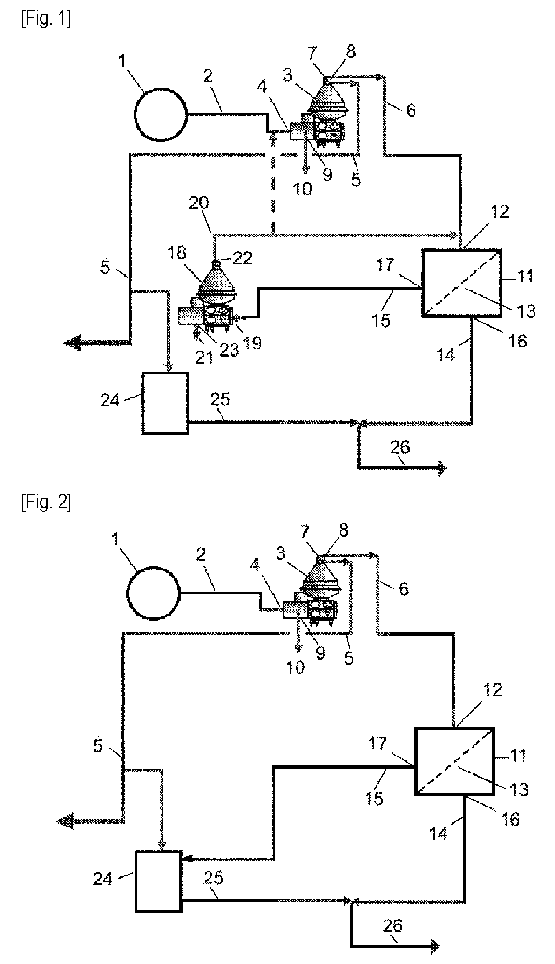

Fig. 1 is a schematic flow diagram showing one example of a cheese starting material milk production device according to the present invention.

In the cheese starting material milk production of the present embodiment, a starting material milk (2) is supplied from a starting material supply means (1) that is a storage tank. The starting material milk (2) is milked from dairy cattle.

First, the starting material milk (2) is supplied to a supply port (4) in the first centrifugal separator (3) and centrifugally separated into a cream fraction (5) and a skim milk fraction (6), and the cream fraction (5), the skim milk fraction (6) and a sludge (10) are discharged from a cream fraction outlet (7), a skim milk fraction outlet (8) and a sludge discharge port (9) respectively.

Before being supplied to the first centrifugal separator (3), the starting material milk may be subjected to temperature adjustment using a heat exchanger, pressure adjustment using a pump or the like, or flow rate adjustment using a valve or the like, which are not shown in the drawings.

The skim milk fraction (6) from the first centrifugal separator (3) is supplied to a supply port (12) in a microfilter (11), treated with a cross flow type microfilter membrane (13), and separated into a permeate (14) having a reduced bacteria content and a retentate (15) containing the residual bacteria that do not pass through the microfilter membrane, and the permeate (14) and retentate (15) are then discharged.

The microfilter (11) has the skim milk fraction supply port (12), subjects the skim milk fraction (6) to treatment using the cross flow type microfilter membrane (13), and has an outlet (16) for the permeate (14) having a reduced bacteria content and an outlet (17) for the retentate (15) containing the residual bacteria that do not pass through the microfilter membrane.

The skim milk fraction (6) from the centrifugal separator is ultimately mixed with the cream and used to produce cheese. The skim milk (6) contains bacteria, and bacteria are separated into the retentate (15).

A first characteristic of this mode is the provision of a second centrifugal separator (18). The retentate (15) is supplied to a supply port (19) in the second centrifugal separator (18) and centrifugally separated into a clean fraction (20) having a low bacteria content and a high bacteria content fraction (21).

The second centrifugal separator (18) has the supply port (19) for the retentate (15), centrifugally separates the retentate (15) into the clean fraction (20) having a low bacteria content and the high bacteria content fraction (21), and is provided with an outlet (22) for the clean fraction (20) and a discharge port (23) for the high bacteria content fraction (21). The first centrifugal separator (3) is mainly used in order to separate into skim milk and cream, whereas the second centrifugal separator (18) is used to remove bacteria (21).

The second centrifugal separator (18) eliminates 60 to 99% of spore-containing bacteria by means of gravity difference within the same temperature range as the microfilter without needing to carry out heat treatment.

A second characteristic of this mode is discharging the high bacteria content fraction (21) from the system and returning the clean fraction (20) to the skim milk fraction supply port (12) in the microfilter and/or the starting material milk supply port (4) in the first centrifugal separator.

Which of these supply ports to return the clean fraction to is a matter that should be appropriately altered and selected according to the type of starting material milk, skim milk, cheese, and so on.

The return means, which consists of ducts, pipes, valves and so on, returns the clean fraction (20) from the outlet (22) for the clean fraction (20) to the skim milk fraction supply port (12) in the microfilter (11) and/or the starting material milk supply port (4) in the first centrifugal separator (3).

In this mode, because the clean fraction (20) contains the skim milk fraction, which has an extremely low bacteria content, it is possible to dilute the treatment liquid and reduce the load on the treatment device (the centrifugal separator or microfilter) to which the treatment liquid is returned. It is possible to carry out the separation by the first centrifugal separator and/or the filtering by the microfilter membrane more efficiently.

In this production mode, the cream fraction (5), which is essential for returning the milk fat component of the cheese, is sterilized in a high temperature sterilization unit (24).

High temperature heat treatment is carried out at 121°C in this mode, but because the quantity of thermally degradable components in the cream fraction is low, damage caused by high temperature heat treatment can be kept to a minimum.

In this production mode, the sterilized cream fraction (25), which contains the milk fat components of the cheese, is combined with the permeate (14) to form a cheese starting material milk (26).

Cheese is obtained, in a flow not shown in the diagrams, by solidifying the cheese starting material milk (26) by means of lactic acid bacteria or an enzyme known as rennet, for example, thereby obtaining a yogurt-like material, converting this yogurt-like material into a white solid, and then compressing this white solid to obtain a cheese starting material.

Fig. 2 shows an example of a conventional cheese starting material milk production device.

In conventional cheese starting material milk production, there are provided a centrifugal separator (3) that centrifugally separates milk (2) into a cream fraction (5) and a skim milk fraction (6); a microfilter (11) which subjects the skim milk fraction (6) to treatment using a microfilter membrane (13) and which has an outlet (16) for a permeate (14) having a reduced bacteria content and an outlet (17) for a retentate (15) containing the residual bacteria that do not pass through the microfilter membrane; and a high temperature sterilization unit (24) which sterilizes a mixed liquid containing the retentate (15) and the cream fraction (5), and a sterilized mixed liquid (25) containing the retentate (15) and the cream fraction (5) is combined with the permeate (14) to form a cheese starting material milk (26).

As can be seen from the comparison given above, the cheese starting material milk production of the present invention does not require high temperature sterilization treatment of the retentate of the skim milk fraction, and accordingly, does not cause denaturing to proteins or flavor components, has no risk of affecting the flavor of the cheese product, and has low energy consumption due to the retentate of the skim milk fraction not being heated to a high temperature.

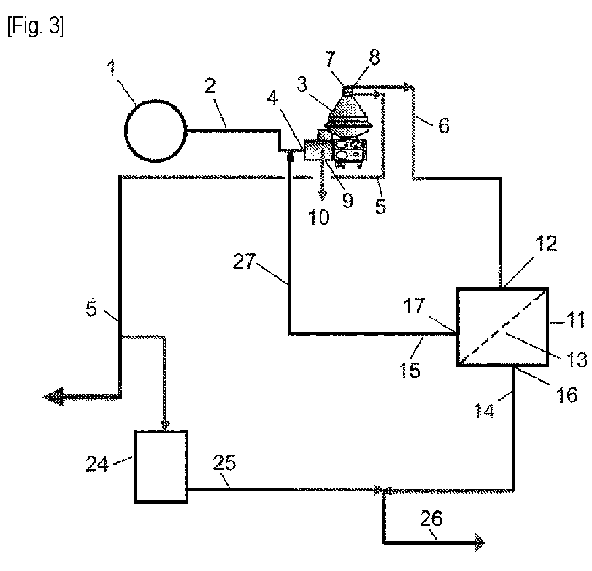

Fig. 3 shows another example of a conventional cheese starting material milk production device.

With this production, there is provided a centrifugal separator (7) that centrifugally separates milk (2) into a cream fraction (5) and a skim milk fraction (6); a microfilter (11) which subjects the skim milk fraction (6) to treatment using a microfilter membrane (13) and which has an outlet (16) for a permeate (14) having a reduced bacteria content and an outlet (17) for a retentate (15) containing the residual bacteria that do not pass through the microfilter membrane; a pipe (27) for returning the retentate (15) from the retentate outlet (17) to a milk supply port (4) in the centrifugal separator (3); and a high temperature sterilization unit (24) which sterilizes the cream fraction (5), and a sterilized cream fraction (25) is combined with the permeate (14) to form a cheese starting material milk (26).

As can be seen from the comparison given above, the cheese starting material milk production of the present invention has no risk of contaminating the cream fraction or the skim milk fraction due to bacteria remaining in the centrifugal separator, increases the bacteria removal rate in the centrifugal separator and does not require a large capacity centrifugal separator.

### [Working Example]

The example given below shows how a cheese starting material can be produced according to the present invention.

Milk having a fat content of 4.05% and a protein content of 3.47% is supplied to a first centrifugal separator at a rate of 10,000 liters per hour.

A cream fraction having a fat content of 40.00% is removed from the first centrifugal separator at a rate of 1,000 liters per hour. Meanwhile, a skim milk fraction having a fat content of 0.05% and a protein content of 3.60% is removed from the first centrifugal separator at a rate of 9,000 liters per hour.

The skim milk fraction is supplied to a microfilter, and a permeate having a fat content of 0.04% and a protein content of 3.58% is removed at a rate of 8,550 liters per hour. Meanwhile, a retentate having a fat content of 0.24% and a protein content of 3.98% is removed at a rate of 450 liters per hour.

The 450 liters per hour of retentate is introduced into a second centrifugal separator. A clean fraction is removed from the second centrifugal separator, mixed with the skim milk fraction, and supplied to the microfilter.

Meanwhile, a high bacteria content fraction is discharged as a sludge from the second centrifugal separator to outside the system.

The stream of the cream fraction, which is an essential component for cheese, is sterilized by being heated to a high temperature of 121°C. The permeate is mixed with the heat treated cream fraction stream, and this mixture is used as a standardized milk for the cheese ultimately produced.

Moreover, the present invention is not limited to the aforementioned working example, a variety of alterations are possible. The scope of the invention i defined by the appended claims.

### Industrial Applicability

This invention can be used to produce a cheese starting material milk.

### Legend

- 2:: Starting material milk
- 3:: First centrifugal separator
- 5:: Cream fraction
- 6:: Skim milk fraction
- 11:: Microfilter
- 14:: Permeate
- 15:: Retentate
- 18:: Second centrifugal separator
- 20:: Clean fraction
- 24:: High temperature sterilization unit
- 26:: Cheese starting material milk

## Claims

1. A device for producing a cheese starting material milk, comprising a starting material supply means that supplies a starting material milk; a first centrifugal separator, which has a supply port for said starting material milk, centrifugally separates said starting material milk into a cream fraction and a skim milk fraction, and has an outlet for said cream fraction, an outlet for said skim milk fraction and a sludge discharge port; a microfilter, which has a supply port for said skim milk fraction, subjects said skim milk fraction to treatment with a cross flow type microfilter membrane, and has an outlet for a permeate having a reduced bacteria content and an outlet for a retentate containing the residual bacteria that do not pass through the microfilter membrane; **characterized by** a second centrifugal separator, which has a supply port for said retentate, centrifugally separates said retentate into a clean fraction having a low bacteria content and a high bacteria content fraction, and has an outlet for said clean fraction and a discharge port for said high bacteria content fraction; a means for returning said clean fraction from said clean fraction outlet to said skim milk fraction supply port in said microfilter and/or said starting material milk supply port in said first centrifugal separator; and a high temperature sterilization unit that sterilizes said cream fraction; and said sterilized cream fraction and said permeate are combined to form a cheese starting material milk.

2. A method for producing a cheese starting material milk, which is **characterized in that** a starting material milk is supplied from a starting material supply means, said starting material milk is supplied to a supply port in a first centrifugal separator, said starting material milk is centrifugally separated into a cream fraction and a skim milk fraction, said cream fraction is discharged from a cream fraction outlet, said skim milk fraction from a skim milk fraction outlet and a sludge from a sludge discharge port, said skim milk fraction is supplied to a supply port in a microfilter, said skim milk fraction is subjected to treatment with a cross flow type microfilter membrane so as to separate said skim milk fraction into a permeate having a reduced bacteria content and a retentate containing the residual bacteria that do not pass through the microfilter membrane, said permeate and said retentate are discharged, said retentate is supplied to a supply port in a second centrifugal separator, said retentate is centrifugally separated into a clean fraction having a low bacteria content and a high bacteria content fraction, the high bacteria content fraction is discharged, said clean fraction is returned to said skim milk fraction supply port in said microfilter and/or said starting material milk supply port in said first centrifugal separator, said clean fraction is sterilized in a high temperature sterilization unit, and said sterilized cream fraction and said permeate are combined to form a cheese starting material milk.

## Patentansprüche

1. Vorrichtung zum Erzeugen einer Ausgangsmaterialmilch für Käse, wobei die Vorrichtung Folgendes umfasst: Ausgangsmaterial-Zufuhrmittel, die eine Ausgangsmaterialmilch zuführen; eine erste Zentrifugen-Abscheidevorrichtung, die einen Zufuhranschluss für die Ausgangsmaterialmilch aufweist, die Ausgangsmaterialmilch durch Zentrifugieren in einen Sahneanteil und einen Magermilchanteil trennt, und einen Auslass für den Sahneanteil, einen Auslass für den Magermilchanteil und einen Abflussanschluss für Rückstand aufweist; einen Mikrofilter, der einen Zufuhranschluss für den Magermilchanteil aufweist, den Magermilchanteil einer Behandlung mit einer Mikrofiltermembran des Querströmungstyps unterzieht, und einen Auslass für ein Permeat, das einen verringerten Bakteriengehalt hat, und einen Auslass für ein Retentat, das die verbleibenden Bakterien enthält, die nicht durch die Mikrofiltermembran gelangen, aufweist;
**gekennzeichnet durch**
eine zweite Zentrifugen-Abscheidevorrichtung, die einen Zufuhranschluss für das Retentat aufweist, das Retentat mittels Zentrifugieren in einen sauberen Anteil, der einen niedrigen Bakteriengehalt aufweist, und einen Anteil mit hohem Bakteriengehalt trennt, und einen Auslass für den sauberen Anteil und einen Abflussanschluss für den Anteil mit hohem Bakteriengehalt aufweist; Mittel zum Zurückführen des sauberen Anteils von dem Auslass für den sauberen Anteil zu dem Magermilchanteil-Zufuhranschluss in dem Mikrofilter bzw. zu dem Ausgangsmaterialmilch-Zufuhranschluss in der ersten Zentrifugen-Abscheidevorrichtung; und eine Hochtemperatur-Sterilisiereinheit, die den Sahneanteil sterilisiert; und wobei der sterilisierte Sahneanteil und das Permeat kombiniert werden, um eine Ausgangsmaterialmilch für Käse zu bilden.

2. Verfahren zum Erzeugen einer Ausgangsmaterialmilch für Käse, wobei das Verfahren **dadurch gekennzeichnet ist, dass** von einem Ausgangsmaterial-Zufuhrmittel eine Ausgangsmaterialmilch zugeführt wird, die Ausgangsmaterialmilch einem Zufuhranschluss in einer ersten Zentrifugen-Abscheidevorrichtung zugeführt wird, die Ausgangsmaterialmilch durch Zentrifugieren in einen Sahneanteil und einen Magermilchanteil getrennt wird, der Sahneanteil von einem Auslass für den Sahneanteil, der Magermilchanteil von einem Auslass für den Magermilchanteil und ein Rückstand von einem Abflussanschluss für Rückstand ausgeleitet werden, der Magermilchanteil einem Zufuhranschluss in einem Mikrofilter zugeführt wird, der Magermilchanteil einer Behandlung mit einer Mikrofiltermembran des Querströmungstyps unterzogen wird, um so den Magermilchanteil in ein Permeat, das einen verringerten Bakteriengehalt hat, und ein Retentat, das die verbleibenden Bakterien enthält, die nicht durch die Mikrofiltermembran gelangen, zu trennen, das Permeat und das Retentat ausgeleitet werden, das Retentat einem Zufuhranschluss in einer zweiten Zentrifugen-Abscheidevorrichtung zugeführt wird, das Retentat mittels Zentrifugieren in einen sauberen Anteil, der eine niedrigen Bakteriengehalt aufweist, und einen Anteil mit hohem Bakteriengehalt getrennt wird, der Anteil mit hohem Bakteriengehalt ausgeleitet wird, der saubere Anteil zu dem Magermilchanteil-Zufuhranschluss in dem Mikrofilter bzw. zu dem Ausgangsmaterialmilch-Zufuhranschluss in der ersten Zentrifugen-Abscheidevorrichtung zurückgeführt wird, der saubere Anteil in einer Hochtemperatur-Sterilisiereinheit sterilisiert wird, und der sterilisierte Sahneanteil und das Permeat kombiniert werden, um eine Ausgangsmaterialmilch für Käse zu bilden.

## Revendications

1. Dispositif de fabrication de lait en tant qu'ingrédient de fromage, comprenant:
des moyens de fourniture de matière première pour fournir une matière première de lait; un premier séparateur centrifuge, qui présente un orifice d'alimentation pour ladite matière première de lait, qui sépare par centrifugation ladite matière première de lait en une fraction de crème et une fraction de lait écrémé, et qui présente une sortie pour ladite fraction de crème, une sortie pour ladite fraction de lait écrémé et un orifice de décharge de boue; un microfiltre, qui présente un orifice d'alimentation pour ladite fraction de lait écrémé, qui soumet ladite fraction de lait écrémé à un traitement avec une membrane de microfiltration du type à écoulement transversal, et qui présente une sortie pour un perméat présentant une teneur en bactéries réduite et une sortie pour un rétentat contenant les bactéries résiduelles qui ne passent pas à travers la membrane de microfiltration;
**caractérisé en ce qu'**un second séparateur centrifuge, qui présente un orifice d'alimentation pour ledit rétentat, sépare par centrifugation ledit rétentat en une fraction propre présentant une faible teneur en bactéries et une fraction à haute teneur en bactéries, et présente une sortie pour ladite fraction propre et un orifice de décharge pour ladite fraction à haute teneur en bactéries; et des moyens pour renvoyer ladite fraction propre en provenance de ladite sortie de fraction propre vers ledit orifice d'alimentation en fraction de lait écrémé dans ledit microfiltre et/ou vers ledit orifice d'alimentation en matière première de lait dans ledit premier séparateur centrifuge; et une unité de stérilisation à haute température qui stérilise ladite fraction de crème; et ladite fraction de crème stérilisée et ledit perméat sont combinés de manière à obtenir du lait en tant qu'ingrédient de fromage.

2. Procédé de fabrication de lait en tant qu'ingrédient de fromage, **caractérisé en ce qu'**une matière première de lait est fournie à partir de moyens de fourniture de matière première, ladite matière première de lait est fournie à un orifice d'alimentation dans un premier séparateur centrifuge, ladite matière première de lait est séparée par centrifugation en une fraction de crème et une fraction de lait écrémé, ladite fraction de crème est déchargée par une sortie de fraction de crème, ladite fraction de lait écrémé est déchargée par une sortie de fraction de lait écrémé et une boue est déchargée par un orifice de décharge de boue, ladite fraction de lait écrémé est transmise à un orifice d'alimentation dans un microfiltre, ladite fraction de lait écrémé est soumise à un traitement avec une membrane de microfiltration du type à écoulement transversal de manière à séparer ladite fraction de lait écrémé en un perméat présentant une teneur en bactéries réduite et un rétentat contenant les bactéries résiduelles qui ne passent pas à travers la membrane de microfiltration, ledit perméat et ledit rétentat sont déchargés, ledit rétentat est transmis à un orifice d'alimentation dans un second séparateur centrifuge, ledit rétentat est séparé par centrifugation en une fraction propre présentant une faible teneur en bactéries et une fraction à haute teneur en bactéries, la fraction à haute teneur en bactéries est déchargée, ladite fraction propre est renvoyée audit orifice d'alimentation en fraction de lait écrémé dans ledit microfiltre et/ou audit orifice d'alimentation en matière première de lait dans ledit premier séparateur centrifuge, ladite fraction propre est stérilisé dans une unité de stérilisation à haute température, et ladite fraction de crème stérilisée et ledit perméat sont combinés de manière à obtenir du lait en tant qu'ingrédient de fromage.
